# EUROPEAN PATENT APPLICATION

(11) **EP 4 485 100 A1**
(43) Date of publication of application: **01.01.2025**
(21) Application number: 23862402.7
(22) Date of filing: 05.09.2023
(51) Int. Cl.: G05B 19/042

(54) **CONTROL METHOD, SYSTEM AND APPARATUS, ELECTRONIC DEVICE, STORAGE MEDIUM, AND PROGRAM PRODUCT**

(30) Priority: 08.09.2022 CN 202211093101
(71) Applicant: Shanghai Kong Intelligent Building Co., Ltd, Shanghai 200080 (CN); GD Kong Intelligent Building Co., Ltd., Foshan, Guangdong 528311 (CN)
(72) Inventor: MAO, Zhili, Shanghai 201702 (CN)
(74) Representative: RGTH
(86) International application number: PCT/CN2023/117103
(87) International publication number: WO 2024/051708

(57) **Abstract**

Provided are a control method, a control system, a control apparatus, an electronic device, a storage medium, and a program product, which relate to the control field and are used for solving a technical problem of a poor operation flexibility of the control system. The control system includes at least two sub-control systems. A controller in each sub-control system may perform communication. The method includes: S101, a first controller determining a target control point position and a first instruction to be executed at the target control point position; S 102, determining an identifier of a second controller of a sub-control system to which the target control point position belongs according to the identifier of the target control point position and a mapping relationship between identifiers of the control point positions and identifiers of the controllers; S 103, transmitting the first instruction to the second controller according to the identifier of the second controller; and S104, the second controller controlling the target control point position according to the first instruction. 1/6

## Description

This application claims a priority to Chinese Patent Application No. 202211093101.9, filed with China National Intellectual Property Administration on September 8, 2022 and titled "CONTROL METHOD, SYSTEM, AND APPARATUS, ELECTRONIC DEVICE, STORAGE MEDIUM, AND PROGRAM PRODUCT", the entire contents of which are incorporated herein by reference.

### FIELD

The present disclosure relates to the control field, and in particular, to a control method, a control system, a control apparatus, an electronic device, a storage medium, and a program product.

### BACKGROUND

One control system may comprise a plurality of sub-control systems. Each sub-control system may comprise a controller, an input/output device, and an actuator. For any one of sub-control systems, the controller in the sub-control system may control the actuator to perform a target operation through the input/output device.

At present, in an existing control system, the controller may only control actuators in the same sub-control system, resulting in a poor operation flexibility of the existing control system.

### SUMMARY

A main objective of the present disclosure is to provide a control method, a control system, a control apparatus, an electronic device, a storage medium, and a program product, to solve a technical problem that an existing control system has a poor operation flexibility.

In order to achieve the above objective, in a first aspect, the present disclosure provides a control method. A control system comprises at least two sub-control systems. Each of the at least two sub-control systems comprises a controller and at least one actuator. Each of the at least one actuator comprises at least one control point position. In any one of the at least two sub-control systems, the controller is configured to control at least one control point position. The method is applied in a first controller. The first controller is a controller in any one of the at least two sub-control systems. The method comprises: determining a target control point position and a first instruction to be executed at the target control point position, where the first instruction comprises an identifier of the target control point position; determining an identifier of a second controller of a sub-control system to which the target control point position belongs according to the identifier of the target control point position and a mapping relationship between identifiers of the control point positions and identifiers of the controllers; and transmitting the first instruction to the second controller according to the identifier of the second controller, to cause the second controller to control the target control point position according to the first instruction.

The present disclosure has a beneficial effect described below. The first controller determines the identifier of the second controller according to the target control point position after determining the target control point position and the first instruction for controlling the target control point position. Then, the first controller can transmit the first instruction to the second controller according to the identifier of the second controller, so that the second controller can control the control point positions in the sub-control system to which the second controller belongs according to the first instruction. Through the above method, the first controller can realize cross-controller control of control point positions of actuators in other sub-control systems, thus improving the operation flexibility of the control system.

Based on the above technical solutions, improvements may be made to the present disclosure as follows.

Further, the method further comprises, prior to determining the identifier of the second controller of the sub-control system to which the target control point position belongs according to the identifier of the target control point position and the mapping relationship between the identifiers of the control point positions and the identifiers of the controllers: receiving first configuration information transmitted by each controller in the control system, the first configuration information comprising the identifier of the controller and an identifier of at least one control point position; and generating the mapping relationship between the identifiers of the control point positions and the identifiers of the controllers according to the first configuration information transmitted by the controllers.

Further, the method further comprises: receiving second configuration information of the second controller inputted by a user through a programming page or a configuration editing page of the first controller, the second configuration information comprising the identifier of the second controller and an identifier of at least one control point position other than the identifier of the at least one control point position comprised in the first configuration information; and generating the mapping relationship between the identifiers of the control point positions and the identifiers of the controllers according to the second configuration information.

Further, the first configuration information further comprises an identifier of a transmission module in a sub-control system to which the controller belongs. The identifier of the transmission module comprises at least one of an identifier of a path for the transmission module to access the controller in the sub-control system to which the transmission module belongs, a device serial number of the transmission module, and a network address of the controller; and for each transmission module, identifiers of control point positions connected to the transmission module are related to a protocol address of a transmission protocol used by the transmission module and are different from each other.

Further, the method further comprises, subsequent to transmitting the first instruction to the second controller according to the identifier of the second controller: receiving feedback information from the second controller, the feedback information being information fed back to the first controller when the second controller determines that the target control point position is not in a sub-control system to which the second controller belongs according to the identifier of the target control point position, and the feedback information being used to indicate that the target control point position is not in the sub-control system to which the second controller belongs; and outputting the feedback information.

In a second aspect, the present disclosure provides a control method. A control system comprises at least two sub-control systems. Each of the at least two sub-control systems comprises a controller and at least one actuator. Each of the at least one actuator comprises at least one control point position. In any one of the at least two sub-control systems, the controller is configured to control at least one control point position. The method is applied in a second controller. The second controller is a controller in any one of the at least two sub-control systems. The method comprises: receiving a first instruction from a first controller, the first instruction being an instruction transmitted by the first controller to a second controller of the sub-control system to which a target control point position belongs according to an identifier of the second controller after determining the identifier of the second controller according to an identifier of the target control point position and a mapping relationship between identifiers of the control point positions and identifiers of the controllers, the first instruction comprising the identifier of the target control point position; and controlling the target control point position according to the first instruction.

Further, the method further comprises, prior to receiving the first instruction from the first controller, transmitting first configuration information of the second controller to the first controller. The first configuration information comprises the identifier of the second controller and an identifier of at least one control point position.

Further, the first configuration information further comprises an identifier of a transmission module in a sub-control system to which the controller belongs. The method further comprises, prior to transmitting the first configuration information of the second controller to the first controller: obtaining an identifier of each transmission module in a sub-control system to which the second controller belongs; obtaining, for each transmission module, an identifier of each control point position connected to the transmission module according to a transmission protocol used by the transmission module; and obtaining the first configuration information of the second controller according to the identifier of each transmission module in the sub-control system to which the second controller belongs and the identifier of each control point position.

Further, the method further comprises, prior to controlling the target control point position according to the first instruction: controlling the target control point position according to the first instruction in response to determining that the target control point position is in a sub-control system to which the second controller belongs according to the identifier of the target control point position; and transmitting feedback information to the first controller in response to determining that the target control point position is not in the sub-control system to which the second controller belongs according to the identifier of the target control point position. The feedback information is used to indicate that the target control point position is not in the sub-control system to which the second controller belongs.

In a third aspect, the present disclosure provides a control system. The control system comprises at least two sub-control systems. Each of the at least two sub-control systems comprises a controller and at least one actuator. Each of the at least one actuator comprises at least one control point position. In any one of the at least two sub-control systems, the controller is configured to control at least one control point position, and the controller is configured to perform the method as described in any one of the first aspect and the second aspect.

In a fourth aspect, the present disclosure provides a heat and ventilation device, comprising the control system as described in the third aspect.

In a fifth aspect, the present disclosure provides a control apparatus. A control system comprises at least two sub-control systems. Each of the at least two sub-control systems comprises a controller and at least one actuator. Each of the at least one actuator comprises at least one control point position. In any one of the at least two sub-control systems, the controller is configured to control at least one control point position. The apparatus is applied in a first controller. The first controller is a controller in any one of the at least two sub-control systems. The apparatus comprises: a first processing module configured to determine a target control point position and a first instruction to be executed at the target control point position, where the first instruction comprises an identifier of the target control point position; a second processing module configured to determine an identifier of a second controller of a sub-control system to which the target control point position belongs according to the identifier of the target control point position and a mapping relationship between identifiers of the control point positions and identifiers of the controllers; and a transmitting module configured to transmit the first instruction to the second controller according to the identifier of the second controller, to cause the second controller to control the target control point position according to the first instruction.

In a sixth aspect, the present disclosure provides a control apparatus. A control system comprises at least two sub-control systems. Each of the at least two sub-control systems comprises a controller and at least one actuator. Each of the at least one actuator comprises at least one control point position. In any one of the at least two sub-control systems, the controller is configured to control the at least one control point position. The apparatus is applied in a second controller. The second controller is a controller in any one of the at least two sub-control systems. The apparatus comprises: a receiving module configured to receive a first instruction from a first controller; and a control module configured to control the target control point position according to the first instruction. The first instruction is an instruction transmitted to the second controller according to an identifier of a second controller of a sub-control system to which a target control point position belongs subsequent to determining, by the first controller, the identifier of the second controller according to an identifier of the target control point position and a mapping relationship between identifiers of the control point positions and identifiers of the controllers. The first instruction comprises the identifier of the target control point position.

Beneficial effects of the control apparatus provided by the present disclosure are the same as those of the above-described control method, and details are omitted herein.

In a seventh aspect, the present disclosure provides an electronic device. The electronic device comprises at least one processor and a memory. The memory stores a computer execution instruction. The at least one processor executes the computer execution instruction stored by the memory, to cause the electronic device to perform the method as described in any one of the first aspect and the second aspect.

In an eighth aspect, the present disclosure provides a computer-readable storage medium, having a computer execution instruction stored thereon. The computer execution instruction, when executed by an electronic device, implements the method as described in any one of the first aspect and the second aspect.

In a ninth aspect, the present disclosure provides a computer program product, comprising a computer program. The computer program, when executed by an electronic device, implements the method as described in any one of the first aspect and the second aspect.

### BRIEF DESCRIPTION OF THE DRAWINGS

In order to clearly explain technical solutions of some embodiments of the present disclosure or in the conventional art, drawings needing to be used in descriptions of some embodiments or the conventional art are briefly described below. Obviously, the drawings as described below show merely some embodiments of the present disclosure. Based on structures illustrated in these drawings, other drawings can be obtained by those skilled in the art without creative efforts.
FIG. 1 is a schematic architectural diagram of a control system in the related art.
FIG. 2 is a schematic architectural diagram of a control system provided by the present disclosure.
FIG. 3 is a schematic structural diagram of another control system provided by the present disclosure.
FIG. 4 is a schematic structural diagram of yet another control system provided by the present disclosure.
FIG. 5 is a schematic flowchart of a control method provided by the present disclosure.
FIG. 6 is a schematic flowchart of another control method provided by the present disclosure.
FIG. 7 is a schematic flowchart of yet another control method provided by the present disclosure.
FIG. 8 is a schematic structural diagram of a control apparatus 20 provided by the present disclosure.
FIG. 9 is a schematic structural diagram of a control apparatus 30 provided by the present disclosure.
FIG. 10 is a schematic structural diagram of an electronic device provided by the present disclosure.

### DETAILED DESCRIPTION

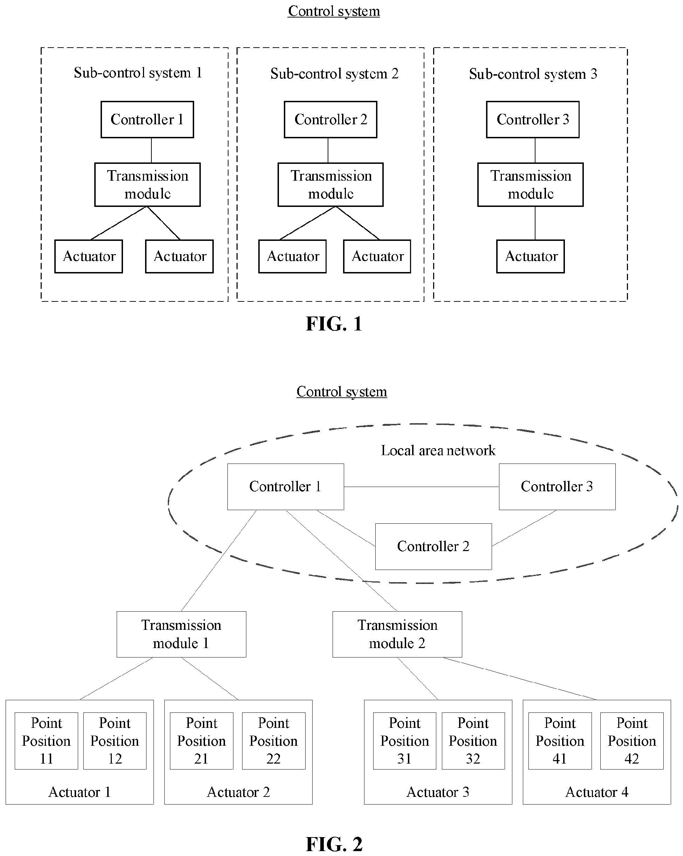

FIG. 1 is a schematic architectural diagram of a control system in the related art. As illustrated in FIG. 1, one control system may comprise a plurality of sub-control systems (such as a sub-control system 1, a sub-control system 2, and a sub-control system 3 that are illustrated in FIG. 1). Each sub-control system may comprise a controller, a transmission module (which may also be referred to as an input/output module), and an actuator. For any one of sub-control systems, the controller in the sub-control system may collect data of actuators in the sub-control system through the transmission module in the sub-control system, and then analyze the collected data to calculate an output result through a built-in program. Then, the controller may also control the actuator through the transmission module according to the output result.

Exemplarily, building industry is taken as an example, and the above-described control system may be, for example, a heating and ventilation control system mounted in a building. A plurality of controllers may be deployed in a heating and ventilation control machine room. Each controller may use a transmission module connected to the controller to control actuators (for example, valves, temperature sensors, flow sensors, and the like) connected to the transmission module in the heating and ventilation system.

However, in an existing control system, sub-control systems are isolated from each other, i.e., the controller can only control actuators in the same sub-control system. Therefore, the existing control system has a poor operation flexibility.

Considering that the poor operation flexibility in the existing control system is caused by the isolation of the sub-control systems in the control system from each other, the present disclosure provides a method where actuator control can be performed cross the sub-control systems, to improve the operation flexibility of the control system. An execution subject of the method may be a controller in any one of the sub-control systems in the control system provided by the present disclosure. First, the control system provided by the present disclosure is described in detail below.

The control system provided by the present disclosure may comprise at least two sub-control systems. For any one of the sub-control systems, the sub-control system may comprise a controller and at least one actuator. Each actuator may comprise at least one control point position. In any one of the sub-control systems, the controller may be configured to control at least one control point position. Communication may be performed between controllers in different sub-control systems.

In another exemplary embodiment of the present disclosure, in any one of the sub-control systems, the controller may be connected to at least one control point position in the sub-control system through the transmission module, and may control the at least one control point position through the transmission module. It should be understood that the transmission module may be integrated in the controller as described above. Alternatively, the transmission module may also be integrated in the actuator. Alternatively, a part of functions of the transmission module may be integrated in the controller and another part of functions of the transmission module may be integrated in the actuator. Alternatively, the transmission module may also be a device that has a data transmission function and is independent of the controller and the actuator.

As an example, the transmission module is independent of the controller and the actuator. FIG. 2 is a schematic architectural diagram of a control system provided by the present disclosure. As illustrated in FIG. 2, for any one of the sub-control systems, the sub-control system may comprise a controller, a transmission module, and at least one actuator. Moreover, in any one of the sub-control systems, the controller may be connected to the at least one control point position through the transmission module.

Exemplarily, for any one of the sub-control systems, the present disclosure does not limit a connection manner between the transmission module and the controller in the sub-control system. Exemplarily, the transmission module may be connected into the controller through any one of an RS485 circuit, Ethernet, ZigBee, Bluetooth, and other manners. Exemplarily, the controller may be any one of controllers having a processing function like a direct digital controller or a Programmable Logic Controller (PLC).

The transmission module may be any kind of devices with the data transmission function. In another exemplary embodiment of the present disclosure, the present disclosure does not limit a transmission protocol used by the transmission module. Exemplarily, the transmission protocol used by the transmission module may be, for example, a ModbusRTU (that is a name of a serial communication protocol) transmission protocol, a Data Communication Protocol for Building Automation and Control Networks (BACnet protocol), or a Message Queuing Telemetry Transport (MOTT) protocol. In some embodiments, functions of the transmission module may also be integrated into the controller.

The above actuator may be any kind of device capable of performing related operations according to control instructions, such as a valve and a sensor for various purposes. In some embodiments, a control point position of the actuator may also be a physical sensor.

It should be understood that the present disclosure does not limit how the controllers in different sub-control systems communicate with each other. Exemplarily, as illustrated in FIG. 2, the controllers in the at least two sub-control systems may be in the same local area network. In some embodiments, the controllers in different sub-control systems may also communicate with each other in different local area networks.

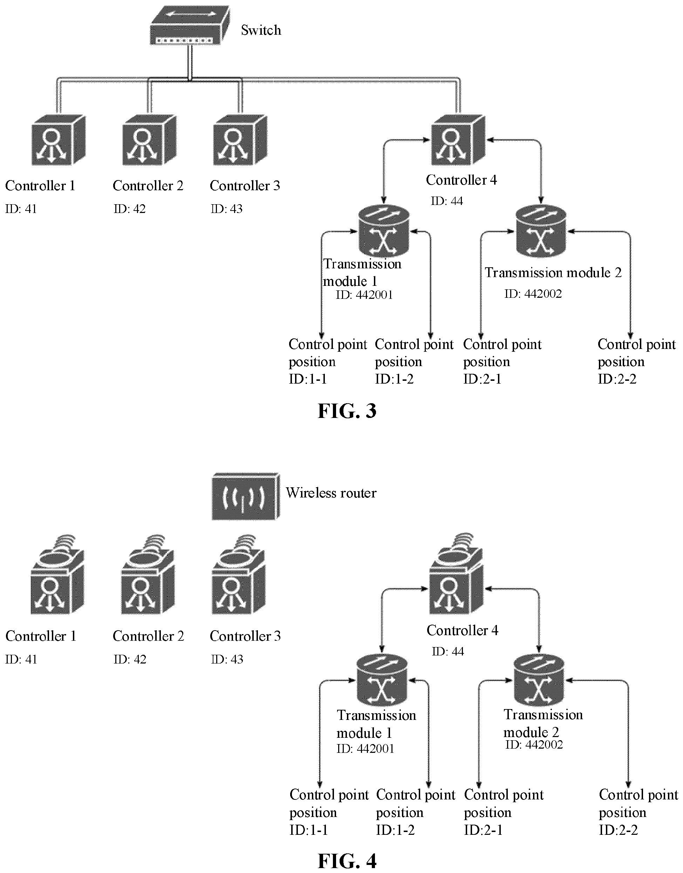

As an example, the controllers in different sub-control systems may be located in the same local area network. It should be understood that the present disclosure does not limit a manner where the controllers in the at least two sub-control systems access the same local area network. In another exemplary embodiment of the present disclosure, the controllers may be in a wired or wireless connection with each other in the same local area network. For example, the controllers may be connected to each other in the same local area network through a Wi-Fi network or Ethernet. Exemplarily, FIG. 3 is a schematic structural diagram of another control system provided by the present disclosure. As illustrated in FIG. 3, the controllers may access the same local area network by each accessing the same switch. FIG. 4 is a schematic structural diagram of another control system provided by the present disclosure. As illustrated in FIG. 4, the controllers may access the same local area network by each accessing the same wireless router.

It should be understood that FIG. 2 is merely an exemplary illustration of the control system provided by the present disclosure by taking the transmission module independent of the controller and the actuator as an example. The present disclosure does not limit a quantity of sub-control systems comprised in the control system, a quantity of transmission modules in one sub-control system, a quantity of actuators to which one transmission module is connectable, and a quantity of point positions that may be comprised by one actuator.

In addition, it should be understood that the present disclosure also does not limit an application scenario of the control system. Exemplarily, as mentioned above, the control system may be applied, for example, to the building industry, and may be the heating and ventilation control system in the building. In some embodiments, the control system may also be, for example, a lighting control system, or a central air-conditioner control system. As an example, the control system is applied in the building industry. In another exemplary embodiment of the present disclosure, one building may comprise, for example, at least one control system (each control system may correspond to one local area network). Alternatively, a plurality of buildings may correspond to one control system, i.e., controllers in the plurality of buildings may be located in the same local area network.

Technical solutions of some embodiments of the present disclosure will be described clearly and completely below in combination with accompanying drawings of some embodiments of the present disclosure. Apparently, the described embodiments are only a part of the embodiments of the present disclosure, rather than all embodiments of the present disclosure. Based on some embodiments of the present disclosure, other embodiments obtained by those skilled in the art without creative efforts shall fall within scope of the present disclosure.

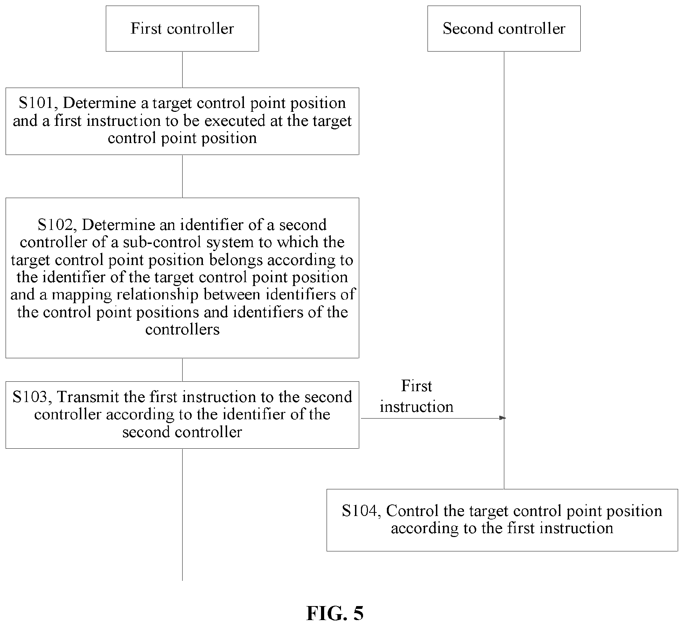

FIG. 5 is a schematic flowchart of a control method provided by the present disclosure. As illustrated in FIG. 5, the method may comprise the following steps.

At step S101, the first controller determines a target control point position and a first instruction to be executed at the target control point position.

As described above, the first controller may be a controller in any one of the above-described sub-control systems. The first instruction may comprise an identifier of the target control point position. In another exemplary embodiment of the present disclosure, the identifiers involved in the present disclosure, for example, each refer to an identity document (ID).

In another exemplary embodiment of the present disclosure, the first controller may perform logic calculation, and may determine the target control point position and the first instruction when determining that a result of the logic calculation indicates to control the target control point position. Exemplarily, as an example, an actuator where the target control point position is located is a valve, and the first controller, for example, may generate a first instruction when an opening degree of the valve is determined to be a target opening degree through a predetermined logic. In this way, the first instruction may be used to indicate the target opening degree of the valve.

Alternatively, the first controller may also generate the first instruction when parameters of the target control point position are determined, through the logic calculation, to be required for subsequently automated logic calculation. In this way, the first instruction may be used to indicate to read a parameter value of the target control point position. Exemplarily, as an example, the actuator where the target control point position is located is a lamp bead sensor, and the target control point position is a color temperature of the lamp bead. For example, the first controller may generate a first instruction for indicating to obtain the color temperature of the lamp bead when the automated logic calculation needs to be performed based on the color temperature of the lamp bead.

In another exemplary embodiment of the present disclosure, the first controller may further respond to a user operation, and determine, according to the user operation, the target control point position and the first instruction to be executed at the target control point position.

At step S102, the first controller determines an identifier of a second controller of a sub-control system to which the target control point position belongs according to the identifier of the target control point position and a mapping relationship between identifiers of the control point positions and identifiers of the controllers.

The second controller may be a controller in any one of sub-control systems other than a sub-control system to which the first controller belongs. Exemplarily, the identifier of the second controller may be, for example, a network address of the second controller, or any one of fields capable of uniquely representing the second controller, such as a device serial number. In some embodiments, the identifier of the second controller may also be pre-set by a user.

Exemplarily, the mapping relationship between the identifiers of the control point positions and the identifiers of the controllers may be pre-stored in the first controller. For example, the mapping relationship between the identifiers of the control point positions and the identifiers of the controllers may be shown in Table 1 below:

**Table 1**

| Identifier of the control point position | Identifier of the controller |
|---|---|
| Control point position identifier 1 | Controller identifier 1 |
| Control point position identifier 2 | Controller identifier 2 |
| Control point position identifier 3 | Controller identifier 3 |

By taking Table 1 as an example, it is assumed that the identifier of the target control point position is the control point position identifier 1, the first controller may determine that the identifier of the second controller of the sub-control system to which the target control point position belongs is the controller identifier 1.

At step S103, the first controller transmits a first instruction to the second controller according to the identifier of the second controller.

Accordingly, the second controller may receive the first instruction from the first controller.

At step S104, the second controller controls the target control point position according to the first instruction.

As an example, the second controller is directly connected to the actuator where the target control point position is located. After the second controller receives the first instruction, the first instruction may be parsed through a protocol pre-configured by the user in the second controller, to obtain the identifier of the target control point position comprised in the first instruction. Therefore, the second controller may determine a target control point position needing to be controlled by the first controller and control the target control point position according to the first instruction.

As an example, the second controller is connected to the actuator where the target control point position is located through a target transmission module. In another exemplary embodiment of the present disclosure, the first instruction may further comprise an identifier of the target transmission module. In this implementation manner, after receiving the first instruction, the second controller may parse the first instruction through, for example, the protocol pre-configured by the user in the second controller to obtain the identifier of the target transmission module comprised in the first instruction and the identifier of the target control point position, to control the target control point position through the target transmission module. Alternatively, the identifier of the target transmission module may not be comprised in the first instruction. In this implementation manner, for example, after obtaining the identifier of the target control point position by parsing the first instruction, the second controller may determine the target transmission module based on the identifier of the target control point position. Exemplarily, for example, a mapping relationship between the identifiers of the control point positions and the identifiers of the transmission modules may be pre-stored in the second controller. The second controller may determine the target transmission module according to the identifier of the target control point position and the mapping relationship between the identifiers of the control point positions and the identifiers of the transmission modules.

It should be understood that control of the target control point position in the present disclosure may refer to outputting data to the actuator where the target control point position is located or refer to collecting "data generated by the actuator during operation or data detected by the actuator" from the target control point position.

In some embodiments, after the first controller determines a target control point position and a first instruction for controlling the target control point position, the identifier of the second controller is determined according to the target control point position. Then, the first controller can transmit the first instruction to the second controller according to the identifier of the second controller, so that the second controller can control the control point position in the sub-control system to which the second controller belongs according to the first instruction. Through the above method, the first controller can realize cross-controller control of control point positions of actuators in other sub-control systems, thus improving the operation flexibility of the control system.

How the first controller obtains the mapping relationship between the identifiers of the control point positions and the identifiers of the controllers is described in detail below.

As a possible implementation manner, the first controller may receive first configuration information transmitted by controllers (comprising the second controller) in the control system. The first configuration information comprises the identifier of the controller and the identifier of at least one control point position. By taking the second controller as an example, the first configuration information comprises the identifier of the second controller and an identifier of at least one control point position in a sub-control system where the second controller is located. Then, the first controller may generate the mapping relationship between the identifiers of the control point positions and the identifiers of the controllers based on the first configuration information transmitted by the controllers.

How the first controller receives the first configuration information transmitted by the controllers (comprising the second controller) in the control system is exemplarily described below.

In another exemplary embodiment of the present disclosure, as an example, the controllers in the control system are located in the same local area network. In this way, the first controller may broadcast a configuration information obtaining request in the local area network. Accordingly, the second controller in the local area network may receive the configuration information obtaining request broadcast by the first controller. After receiving the configuration information obtaining request, the controllers in the local area network may transmit their own first configuration information to the first controller. The configuration information obtaining request may comprise, for example, an identifier of the first controller, enabling the controllers in the local area network to transmit the first configuration information of the controller to the first controller according to the identifier of the first controller. Exemplarily, the first controller may parse the first configuration information of each controller through the protocol pre-configured by the user in the first controller to obtain the identifier of the controller and the identifier of at least one control point position.

In this implementation manner, the first controller may obtain first configuration information of the second controller transmitted by the second controller by transmitting the configuration information obtaining request to the second controller, which further enables the first controller to obtain the mapping relationship between the identifiers of the control point positions and the identifiers of the controllers.

Alternatively, the second controller may also transmit the first configuration information of the second controller to other controllers (comprising the first controller) in the local area network by broadcasting after starting. Alternatively, the second controller may also broadcast the first configuration information of the second controller to the first controller in response to a first-configuration-information transmission operation triggered by the user. In some embodiments, the user may also add the identifier of the second controller to the first controller, enabling the first controller to realize the cross-controller control according to the identifier of the controller added by the user.

As a possible implementation manner, the first controller may further receive second configuration information of the second controller inputted by the user through a programming page of the first controller. The second configuration information may comprise the identifier of the second controller and an identifier of at least one control point position other than the identifier of the at least one control point position comprised in the first configuration information. By writing the second configuration information of the second controller into a program executable by the first controller, the first controller may perform logical calculation according to data of the control point position in the sub-control system to which the second controller belongs, or control the control point position in the sub-control system to which the second controller belongs by running the program. Through the above method, cross-controller logic calculation is realized.

As another possible implementation manner, the first controller may receive the second configuration information of the second controller inputted by the user through a configuration editing page of the first controller. Configuration editing means that user may complete required software functions in a simple way similar to "building blocks", without a need to write computer programs. In some embodiments, the above configuration editing page may also be referred to as a configuration design page. By receiving the second configuration information of the second controller inputted by the user through the configuration editing page of the first controller, the second configuration information of the second controller may be added to a configuration editing logic, thereby realizing cross-controller configuration editing. When the first controller runs a well-designed configuration logic, because the well-designed configuration logic comprises the second configuration information of the second controller, cross-controller configuration execution is realized.

After obtaining the second configuration information, the first controller may generate the mapping relationship between the identifiers of the control point positions and the identifiers of the controllers based on the second configuration information. In another exemplary embodiment of the present disclosure, a method where the first controller generates the mapping relationship between the identifiers of the control point positions and the identifiers of the controllers based on the second configuration information may refer to the method described in some of the above embodiments, and details are omitted herein.

In some embodiments, the first configuration information and/or the second configuration information may further comprise an identifier of a transmission module in a sub-control system to which the controller belongs. As a possible implementation manner, the identifier of the transmission module in the sub-control system to which the controller belongs may comprise at least one of an identifier of a path for the transmission module to access the controller in the sub-control system to which the transmission module belongs, a device serial number of the transmission module, and a network address of the controller.

By taking the second controller as an example, it is assumed that the identifier of the transmission module in the sub-control system to which the second controller belongs may comprise an identifier of a path for the transmission module to access the second controller, the device serial number of the transmission module, and a network address of the second controller. It should be understood that the present disclosure does not limit an order of the identifier of the path, the device serial number and the network address in identifiers of the transmission module.

Exemplarily, as an example, the second controller is connected to transmission modules in the sub-control system to which the second controller belongs through different buses. It is assumed that a bus through which one transmission module is connected to the second controller is a second bus, the identifier of the path for the transmission module to access the second controller may be 2. As an example, one bus may be connected to a plurality of transmission modules. Exemplarily, the device serial number of the transmission module may refer to a serial number (such as 001) of the transmission module in the bus. In some embodiments, the serial number of the transmission module in the bus may also be referred to as a slave station address of the transmission module.

By taking control systems illustrated in FIG. 3 and FIG. 4 as examples, it is assumed that the transmission module is the transmission module 1, and the controller 4 is the second controller. As illustrated in FIG. 3 and FIG. 4, a network address of the controller 4 may be 44. An identifier of the transmission module 1 may be 442001. 44 represents the network address of the second controller, 2 represents the identifier of the path for the transmission module to access the second controller, and 001 represents the device serial number of the transmission module.

As a possible implementation manner, for any one of transmission modules, identifiers of control point positions connected to the transmission module may each be related to a protocol address of a transmission protocol used by the transmission module and are different from each other.

Exemplarily, as an example, the transmission protocol used by the transmission module is the ModbusRTU protocol. In the ModbusRTU protocol, protocol addresses assigned to different control point positions connected to the transmission module are different. Therefore, the protocol address of the transmission protocol may be used as the identifier of the control point position, to ensure uniqueness of the identifiers of the control point positions. Moreover, it is ensured that the identifiers of different control point positions are different from each other.

Exemplarily, still by taking the control systems illustrated in FIG. 3 and FIG. 4 as examples, identifiers of control point positions connected to the transmission module 1 may be 1-1 and 1-2, and identifiers of control point positions connected to the transmission module 2 may be 2-1 and 2-2.

In some embodiments, uniqueness of the identifier of the transmission module is ensured by using at least one of the identifier of the path for the transmission module to access the second controller, the device serial number of the transmission module, and the network address of the second controller as the identifier of the transmission module. By ensuring the uniqueness of the identifier of the transmission module and the uniqueness of the identifier of the control point position, the accuracy and efficiency of the operation of the control system across the sub-systems are improved.

By using an example where the first configuration information further comprises the identifier of the transmission module in the sub-control system to which the controller belongs, the following describes how the second controller obtains the first configuration information of the second controller in detail.

In another exemplary embodiment of the present disclosure, before transmitting the first configuration information of the second controller to the first controller, the second controller may obtain the identifier of each transmission module in the sub-control system to which the second controller belongs. Exemplarily, the second controller may determine the identifier of each transmission module, for example, based on the at least one of an identifier of a path for each transmission module to access the second controller, the device serial number of the transmission module, and the network address of the second controller. Further, the second controller may also encode the identifier of each transmission module and save the encoded identifier as a data table to improve query efficiency and transmission efficiency.

For any one of the transmission modules, the second controller may obtain the identifiers of the control point positions connected to the transmission module according to the transmission protocol used by the transmission module. As mentioned above, the identifiers of the control point positions may be related to the protocol address of the transmission protocol used by the transmission module and are different from each other.

Exemplarily, as an example, the transmission protocol used by the transmission module is the BACnet protocol. The second controller may determine the identifiers of the control point positions according to a protocol address that is assignable by the BACnet protocol.

After obtaining the identifiers of the transmission modules and the identifiers of the control point positions, the second controller may obtain the first configuration information of the second controller according to the identifiers of the transmission modules in the sub-control system to which the second controller belongs and the identifiers of the control point positions. In another exemplary embodiment of the present disclosure, for example, the second controller may process the identifier of the second controller, the identifier of the transmission module in the sub-control system to which the second controller belongs, and the identifiers of the control point positions through communication protocols common to controllers in the local area network, to obtain the first configuration information of the second controller. In this way, after receiving the first configuration information, the first controller may obtain the first configuration information of the second controller by parsing the first configuration information through the same communication protocol.

In some embodiments, the second controller may collect the identifier of the transmission module and the identifier of the control point position in the sub-control system to which the second controller belongs, which enables the second controller to transmit the first configuration information of the second controller to other controllers, thereby enabling the cross-controller control to be realized in the control system.

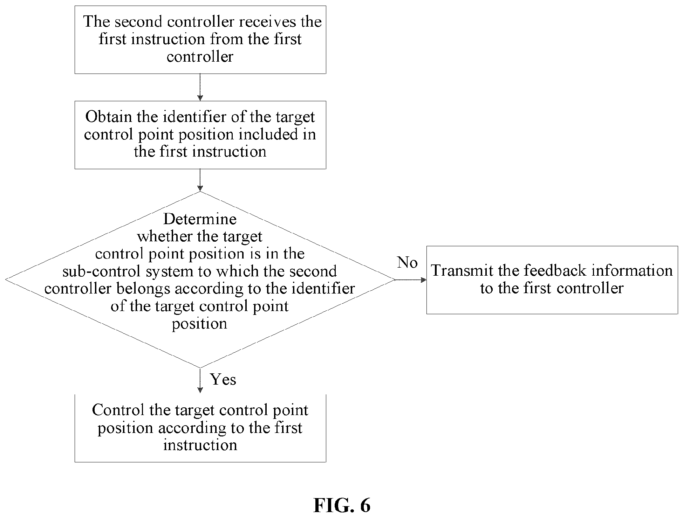

In some embodiments, before controlling the target control point position according to the first instruction, the second controller may determine whether the target control point position is currently in the sub-control system to which the second controller belongs. As a possible implementation manner, FIG. 6 is a schematic flowchart of another control method provided by the present disclosure. As illustrated in FIG. 6, the second controller may receive the first instruction from the first controller, and then parse the first instruction to obtain the identifier of the target control point position comprised in the first instruction.

Then, the second controller may determine whether the target control point position is in the sub-control system to which the second controller belongs according to the identifier of the target control point position. In another exemplary embodiment of the present disclosure, an identifier list comprising identifiers of the control point positions in the sub-control system to which the second controller belongs is pre-stored in the second controller. The second controller may determine whether the target control point position is in the sub-control system to which the second controller belongs according to the identifier list for the control point positions in the sub-control system to which the second controller belongs and the identifier of the target control point position. When the identifier list for the control point positions comprises no identifier of the target control point position, the second controller may determine that the target control point position is not in the sub-control system to which the second controller belongs. When the identifier list for the control point positions comprises the identifier of the target control point position, the second controller may determine that the target control point position is in the sub-control system to which the second controller belongs.

When the second controller determines that the target control point position is in the sub-control system to which the second controller belongs according to the identifier of the target control point position, it indicates that the second controller can control the target control point position. In this way, the second controller may execute step S103, i.e., control the target control point position according to the first instruction.

When the second controller determines that the target control point position is not in the sub-control system to which the second controller belongs according to the identifier of the target control point position, it indicates that the second controller cannot control the target control point position. Therefore, the second controller may transmit feedback information, which is used to indicate that the target control point position is not in the sub-control system to which the second controller belongs, to the first controller.

Accordingly, the first controller may receive feedback information transmitted by the second controller to the first controller when it is determined that the target control point position is not in the sub-control system to which the second controller belongs according to the identifier of the target control point position. Further, after receiving the feedback information, the first controller may output the feedback information. In another exemplary embodiment of the present disclosure, for example, the first controller may display the feedback information through a display apparatus. Alternatively, the first controller may also broadcast the feedback information through a voice output apparatus. By outputting the feedback information, the user may know that the target control point position cannot be controlled by the second controller currently, thereby improving user experience.

In some embodiments, further, after receiving the feedback information, the first controller may also delete the identifier of the target control point position in the first configuration information of the second controller stored by the first controller, to avoid retransmitting the first instruction comprising the identifier of the target control point position to the second controller, which further improves the operation efficiency of the first controller.

As an example, the above-described control system is taken as a heating and ventilation control system applied in the building industry, and the control method provided by the present disclosure is illustratively described below.

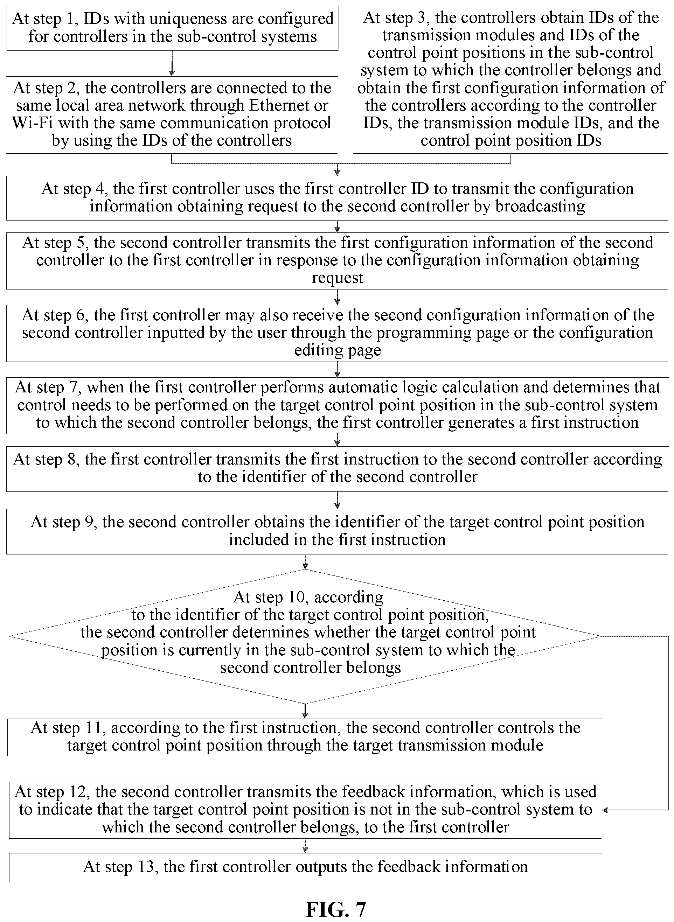

Exemplarily, FIG. 7 is a schematic flowchart of yet another control method provided by the present disclosure. As illustrated in FIG. 7, the method may comprise the following steps.

At step 1, IDs with uniqueness are configured for controllers in the sub-control systems.

In another exemplary embodiment of the present disclosure, the IDs of the controllers may be determined by the user and pre-stored in the controllers. Alternatively, the IDs of the controllers described above may also be related to a hardware configuration of the controller. For example, the controller ID may be a device serial number, a Media Access Control Address (MAC address), or the like.

At step 2, the controllers are connected to the same local area network through Ethernet or Wi-Fi with the same communication protocol by using the IDs of the controllers.

The communication protocol described herein may satisfy the following functions.

First, this communication protocol may perform data transmission in the local area network with the help of a Transmission Control Protocol/Internet Protocol (TCP/IP protocol).

Second, the communication protocol supports transmission of information obtaining requests to other controllers by broadcasting. A controller receiving the request may reply to the broadcasted request according to its own first configuration information.

Third, the communication protocol supports query and modification of data in an end-to-end manner. For end-to-end, it is necessary to constrain controllers needing to be queried and modified with unique controller IDs to ensure uniqueness of the controller IDs.

At step 3, the controllers obtain IDs of the transmission modules and IDs of the control point positions in the sub-control system to which the controller belongs and obtain the first configuration information of the controllers according to the controller IDs, the transmission module IDs, and the control point position IDs.

In another exemplary embodiment of the present disclosure, a specific implementation manner of step 3 may refer to the method described in some of the foregoing embodiments, and details are omitted herein.

At step 4, the first controller uses the first controller ID to transmit the configuration information obtaining request to the second controller by broadcasting.

At step 5, the second controller transmits the first configuration information of the second controller to the first controller in response to the configuration information obtaining request.

At step 6, the first controller may also receive the second configuration information of the second controller inputted by the user through the programming page or the configuration editing page.

At step 7, when the first controller performs automatic logic calculation and determines that control needs to be performed on the target control point position in the sub-control system to which the second controller belongs, the first controller generates a first instruction.

At step 8, the first controller transmits the first instruction to the second controller according to the identifier of the second controller.

At step 9, the second controller obtains the identifier of the target control point position comprised in the first instruction.

At step 10, the second controller determines, according to the identifier of the target control point position, whether the target control point position is currently in the sub-control system to which the second controller belongs.

In response to that the target control point position is currently in the sub-control system to which the second controller belongs, step 11 is executed. In response to that no target control point position is currently in the sub-control system to which the second controller belongs, step 12 and step 13 are executed.

At step 11, the second controller controls, according to the first instruction, the target control point position through the target transmission module.

At step 12, the second controller transmits the feedback information, which is used to indicate that the target control point position is not in the sub-control system to which the second controller belongs, to the first controller.

At step 13, the first controller outputs the feedback information.

In some embodiments, controllers of sub-control systems in the control system are connected to the same local area network and obtain the configuration information of other controllers. In this way, the cross-controller control can be realized in different sub-control systems through the controller, which improves the operation flexibility of the control system. Through the programming page and configuration editing page of one controller, the configuration information of other controllers is obtained, enabling cross-controller programming and configuration editing to be realized through one controller. Compared with the conventional art where programming pages and configuration editing pages of different controllers need to be switched and where each controller needs to be separately provided, methods of cross-device programming and cross-device configuration editing provided by the present disclosure improve the flexibility of programming in the control system and further improves the operation flexibility of the control system.

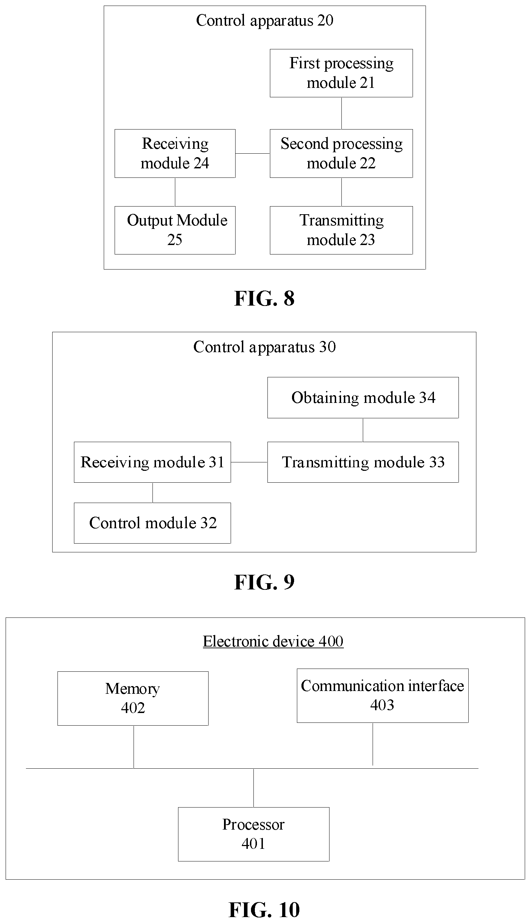

FIG. 8 is a schematic structural diagram of a control apparatus 20 provided by the present disclosure. The control apparatus may be applied in the controller described in any of the preceding embodiments. As illustrated in FIG. 8, the control apparatus 20 may comprise a first processing module 21, a second processing module 22, and a transmitting module 23.

The first processing module 21 is configured to determine a target control point position and a first instruction to be executed at the target control point position. The first instruction comprises an identifier of the target control point position.

The second processing module 22 is configured to determine an identifier of a second controller of a sub-control system to which the target control point position belongs according to the identifier of the target control point position and a mapping relationship between identifiers of the control point positions and identifiers of the controllers.

The transmitting module 23 is configured to transmit the first instruction to the second controller according to the identifier of the second controller, to cause the second controller to control the target control point position according to the first instruction.

In another exemplary embodiment of the present disclosure, the control apparatus 20 may further comprise a receiving module 24 configured to receive the first configuration information transmitted by each controller in the control system. The first configuration information comprises an identifier of the controller and an identifier of at least one control point position. In another exemplary embodiment of the present disclosure, the second processing module 22 is further configured to generate the mapping relationship between the identifiers of the control point positions and the identifiers of the controllers according to the first configuration information transmitted by the controllers.

In another exemplary embodiment of the present disclosure, the receiving module 24 is further configured to receive second configuration information of the second controller inputted by a user through a programming page or a configuration editing page of the first controller. The second configuration information comprises the identifier of the second controller and an identifier of at least one control point position other than the identifier of the at least one control point position comprised in the first configuration information. In another exemplary embodiment of the present disclosure, the second processing module 22 is further configured to generate the mapping relationship between the identifiers of the control point positions and the identifiers of the controllers according to the second configuration information.

In another exemplary embodiment of the present disclosure, the first configuration information further comprises an identifier of a transmission module in a sub-control system to which the controller belongs. The identifier of the transmission module comprises at least one of an identifier of a path for the transmission module to access the controller in the sub-control system to which the transmission module belongs, a device serial number of the transmission module, and a network address of the controller. For each transmission module, identifiers of control point positions connected to the transmission module are related to a protocol address of a transmission protocol used by the transmission module and are different from each other.

In another exemplary embodiment of the present disclosure, the receiving module 24 is further configured to, subsequent to transmitting the first instruction to the second controller according to the identifier of the second controller, receive feedback information from the second controller. The feedback information is information fed back to the first controller when the second controller determines that the target control point position is not in a sub-control system to which the second controller belongs according to the identifier of the target control point position, and the feedback information is used to indicate that the target control point position is not in the sub-control system to which the second controller belongs.

In another exemplary embodiment of the present disclosure, the apparatus 20 may further comprise an output module 25 for outputting the feedback information.

The control apparatus 20 provided by the present disclosure is used for executing some embodiments of the control method executed by the first controller, and has a implementation principle and technical effect similar to those of the control method, and details are omitted herein.

FIG. 9 is a schematic structural diagram of a control apparatus 30 provided by the present disclosure. The control apparatus 30 may be applied in the second controller as described in any of the preceding embodiments. As illustrated in FIG. 9, the control apparatus 30 may comprise a receiving module 10 and a control module 32.

The receiving module 31 is configured to receive a first instruction from a first controller. The first instruction is an instruction transmitted to the second controller according to an identifier of a second controller of a sub-control system to which a target control point position belongs subsequent to determining, by the first controller, the identifier of the second controller according to an identifier of the target control point position and a mapping relationship between identifiers of the control point positions and identifiers of the controllers. The first instruction comprises the identifier of the target control point position.

The control module 32 is configured to control the target control point position according to the first instruction.

In another exemplary embodiment of the present disclosure, the apparatus 30 may further comprise a transmission module 33 configured to transmit first configuration information of the second controller to the first controller. The first configuration information comprises the identifier of the second controller and an identifier of at least one control point position.

In another exemplary embodiment of the present disclosure, in an example where the first configuration information further comprises an identifier of a transmission module in a sub-control system to which the controller belongs, the control apparatus 30 may further comprise an obtaining module 34. The obtaining module 34 is configured to, prior to transmitting the first configuration information of the second controller to the first controller: obtain an identifier of each transmission module in a sub-control system to which the second controller belongs; obtain, for each transmission module, an identifier of each control point position connected to the transmission module according to a transmission protocol used by the transmission module; and obtain the first configuration information of the second controller according to the identifier of each transmission module in the sub-control system to which the second controller belongs and the identifier of each control point position.

In another exemplary embodiment of the present disclosure, the control module 32 is further configured to, prior to controlling the target control point position according to the first instruction: control the target control point position according to the first instruction in response to determining that the target control point position is in a sub-control system to which the second controller belongs according to the identifier of the target control point position. In another exemplary embodiment of the present disclosure, the transmitting module 33 is further configured to transmit feedback information to the first controller in response to determining that the target control point position is not in the sub-control system to which the second controller belongs according to the identifier of the target control point position. The feedback information is used to indicate that the target control point position is not in the sub-control system to which the second controller belongs.

The control apparatus 30 provided by the present disclosure is used for executing some embodiments of the control method executed by the second controller, and has a implementation principle and technical effect similar to those of the control method, and details are omitted herein.

The present disclosure also provides a heat and ventilation device. The heat and ventilation device may comprise the control system as described in any of the preceding embodiments. The implementation principle and technical effect of the heating and ventilation device are similar to those of the aforementioned control method, and details are omitted herein.

The present disclosure also provides an electronic device. The electronic device may be any one of controllers in the control system as described above. The Technical effect of the electronic device is similar to that of the aforementioned control method, and details are omitted herein. FIG. 10 is a schematic structural diagram of an electronic device provided by the present disclosure. Referring to FIG. 10, the electronic device 400 may comprise at least one processor 401 and a memory 402.

The memory 402 is configured to store a program. In an exemplary embodiment of the present disclosure, the program may comprise a program code, and the program code comprises computer operation instructions.

The memory 402 may comprise a high-speed RAM memory or a non-volatile memory, such as at least one magnetic disk memory.

The processor 401 is configured to execute the computer execution instructions stored in the memory 402 to implement the control method described in the aforementioned method embodiments. The processor 401 may be a Central Processing Unit (CPU), an Application Specific Integrated Circuit (ASIC), or one or more integrated circuits configured to implement some embodiments of the present disclosure.

In another exemplary embodiment of the present disclosure, the electronic device 400 may further comprise a communication interface 403. In specific implementation, when the communication interface 403, the memory 402, and the processor 401 are independently implemented, the communication interface 403, the memory 402, and the processor 401 may be connected to each other through the bus and communicate with each other. The bus may be an Industry Standard Architecture (ISA) bus, a Peripheral Component (PCI) bus, an Extended Industry Standard Architecture (EISA) bus, or the like. The buses may be divided into address buses, data buses, control buses, and the like, but this does not mean that there is only one bus or one type of bus.

In another exemplary embodiment of the present disclosure, in specific implementation, when the communication interface 403, the memory 402, and the processor 401 are integrated on one chip for implementation, the communication interface 403, the memory 402, and the processor 401 may complete communication through an internal interface.

The present disclosure also provides a computer-readable storage medium. The computer-readable storage medium may comprise various media capable of storing program codes, such as a U disk, a removable hard disk, a Read-Only Memory (ROM), a Random Access Memory (RAM), a magnetic disk, or an optical disk. In an exemplary embodiment of the present disclosure, the computer-readable storage medium stores program instructions, and the program instructions are used for the methods in some embodiments described above.

The present disclosure also provides a program product. The program product comprises execution instructions stored in the readable storage medium. The electronic device may read the execution instructions from the readable storage medium and execute the execution instructions, such that the control method provided by various embodiments described above is implemented.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements do not make the essence of corresponding technical solutions depart from the scope of the technical solutions of the embodiments of the present disclosure.

## Claims

1. A control method, a control system comprising at least two sub-control systems, each of the at least two sub-control systems comprising a controller and at least one actuator, each of the at least one actuator comprising at least one control point position, in any one of the at least two sub-control systems, the controller controlling the at least one control point position, the method being applied in a first controller, the first controller being the controller in any one of the at least two sub-control systems, the method comprising:
determining a target control point position and a first instruction to be executed at the target control point position, the first instruction comprising an identifier of the target control point position;
determining an identifier of a second controller of the sub-control system to which the target control point position belongs according to the identifier of the target control point position and a mapping relationship between identifiers of the control point positions and identifiers of the controllers; and
transmitting the first instruction to the second controller according to the identifier of the second controller, to cause the second controller to control the target control point position according to the first instruction.

2. The method according to claim 1, further comprising, prior to determining the identifier of the second controller of the sub-control system to which the target control point position belongs according to the identifier of the target control point position and the mapping relationship between the identifiers of the control point positions and the identifiers of the controllers:
receiving first configuration information transmitted by each controller in the control system, the first configuration information comprising the identifier of the controller and an identifier of the at least one control point position; and
generating the mapping relationship between the identifiers of the control point positions and the identifiers of the controllers according to the first configuration information transmitted by the controllers.

3. The method according to claim 2, further comprising:
receiving second configuration information of the second controller inputted by a user through a programming page or a configuration editing page of the first controller, the second configuration information comprising the identifier of the second controller and an identifier of at least one control point position other than the identifier of the at least one control point position comprised in the first configuration information; and
generating the mapping relationship between the identifiers of the control point positions and the identifiers of the controllers according to the second configuration information.

4. The method according to claim 2, wherein the first configuration information further comprises:
an identifier of a transmission module in the sub-control system to which the controller belongs, wherein:
the identifier of the transmission module comprises at least one of an identifier of a path for the transmission module to access the controller in the sub-control system to which the transmission module belongs, a device serial number of the transmission module, and a network address of the controller; and
for each transmission module, identifiers of control point positions connected to the transmission module are related to a protocol address of a transmission protocol used by the transmission module and are different from each other.

5. The method according to any one of claims 1 to 4, further comprising, subsequent to transmitting the first instruction to the second controller according to the identifier of the second controller:
receiving feedback information from the second controller, the feedback information being information fed back to the first controller when the second controller determines that the target control point position is not in the sub-control system to which the second controller belongs according to the identifier of the target control point position, and the feedback information being used to indicate that the target control point position is not in the sub-control system to which the second controller belongs; and
outputting the feedback information.

6. A control method, a control system comprising at least two sub-control systems, each of the at least two sub-control systems comprising a controller and at least one actuator, each of the at least one actuator comprising at least one control point position, in any one of the at least two sub-control systems, the controller being configured to control the at least one control point position, the method being applied in a second controller, the second controller being a controller in any one of the at least two sub-control systems, the method comprising:
receiving a first instruction from a first controller, the first instruction being an instruction transmitted by the first controller to a second controller of the sub-control system to which a target control point position belongs according to an identifier of the second controller after determining the identifier of the second controller according to an identifier of the target control point position and a mapping relationship between identifiers of the control point positions and identifiers of the controllers, the first instruction comprising the identifier of the target control point position; and
controlling the target control point position according to the first instruction.

7. The method according to claim 6, further comprising, prior to receiving the first instruction from the first controller:
transmitting first configuration information of the second controller to the first controller, the first configuration information comprising the identifier of the second controller and an identifier of the at least one control point position.

8. The method according to claim 7, wherein the first configuration information further comprises an identifier of a transmission module in the sub-control system to which the controller belongs, and wherein the method further comprises, prior to transmitting the first configuration information of the second controller to the first controller:
obtaining an identifier of each transmission module in the sub-control system to which the second controller belongs;
obtaining, for each transmission module, an identifier of each control point position connected to the transmission module according to a transmission protocol used by the transmission module; and
obtaining the first configuration information of the second controller according to the identifier of each transmission module in the sub-control system to which the second controller belongs and the identifier of each control point position.

9. The method according to any one of claims 6 to 8, further comprising, prior to controlling the target control point position according to the first instruction:
controlling the target control point position according to the first instruction in response to determining that the target control point position is in the sub-control system to which the second controller belongs according to the identifier of the target control point position; and
transmitting feedback information to the first controller in response to determining that the target control point position is not in the sub-control system to which the second controller belongs according to the identifier of the target control point position, the feedback information being used to indicate that the target control point position is not in the sub-control system to which the second controller belongs.

10. A control system, comprising:
at least two sub-control systems, each of the at least two sub-control systems comprising a controller and at least one actuator, each of the at least one actuator comprising at least one control point position, in any one of the at least two sub-control systems, the controller being configured to control the at least one control point position, and the controller being configured to perform the method according to any one of claims 1 to 9.

11. A heat and ventilation device, comprising the control system according to claim 10.

12. A control apparatus, a control system comprising at least two sub-control systems, each of the at least two sub-control systems comprising a controller and at least one actuator, each of the at least one actuator comprising at least one control point position, in any one of the at least two sub-control systems, the controller being configured to control the at least one control point position, the apparatus being applied in a first controller, the first controller being a controller in any one of the at least two sub-control systems, the apparatus comprising:
a first processing module configured to determine a target control point position and a first instruction to be executed at the target control point position, the first instruction comprising an identifier of the target control point position;
a second processing module configured to determine an identifier of a second controller of the sub-control system to which the target control point position belongs according to the identifier of the target control point position and a mapping relationship between identifiers of the control point positions and identifiers of the controllers; and
a transmitting module configured to transmit the first instruction to the second controller according to the identifier of the second controller, to cause the second controller to control the target control point position according to the first instruction.

13. A control apparatus, a control system comprising at least two sub-control systems, each of the at least two sub-control systems comprising a controller and at least one actuator, each of the at least one actuator comprising at least one control point position, in any one of the at least two sub-control systems, the controller being configured to control the at least one control point position, the apparatus being applied in a second controller, the second controller being a controller in any one of the at least two sub-control systems, the apparatus comprising:
a receiving module configured to receive a first instruction from a first controller, the first instruction being an instruction transmitted by the first controller to a second controller of the sub-control system to which a target control point position belongs according to an identifier of the second controller after determining the identifier of the second controller according to an identifier of the target control point position and a mapping relationship between identifiers of the control point positions and identifiers of the controllers, the first instruction comprising the identifier of the target control point position; and
a control module configured to control the target control point position according to the first instruction.

14. An electronic device, comprising:
at least one processor; and
a memory storing a computer execution instruction, the at least one processor executing the computer execution instruction stored by the memory, to cause the electronic device to perform the method according to any one of claims 1 to 9.

15. A computer-readable storage medium, having a computer execution instruction stored thereon, wherein the computer execution instruction, when executed by an electronic device, implements the method according to any one of claims 1 to 9.

16. A computer program product, comprising a computer program, wherein the computer program, when executed by an electronic device, implements a method according to any one of claims 1 to 9.
